# EUROPEAN PATENT SPECIFICATION

(11) **EP 2 936 385 B1**
(45) Date of publication and mention of the grant of the patent: **10.04.2019**
(21) Application number: 13818217.5
(22) Date of filing: 19.12.2013
(51) Int. Cl.: G06K 9/00

(54) **METHOD FOR TRACKING A TARGET OBJECT BASED ON A STATIONARY STATE, CAMERA SYSTEM AND MOTOR VEHICLE**
VERFAHREN ZUR VERFOLGUNG EINES ZIELOBJEKTS AUF BASIS EINES STILLSTANDSZUSTANDS, KAMERASYSTEM UND KRAFTFAHRZEUG
PROCÉDÉ POUR LA POURSUITE D'UN OBJET CIBLE SUR LA BASE D'UN ÉTAT STATIONNAIRE, SYSTÈME DE CAMÉRA ET VÉHICULE AUTOMOBILE

(30) Priority: 19.12.2012 DE 102012024997
(43) Date of publication of application: 28.10.2015
(73) Proprietor: Connaught Electronics Ltd., Tuam, County Galway (IE)
(72) Inventor: HUGHES, Ciaran, Kinvara County Galway (IE); FINN, Sean, Galway City County Galway (IE); THOMANEK, Jan, 74321 Bietigheim-Bissingen (DE); TADJINE, Hadj Hamma, 12307 Berlin (DE); WESTHUES, Andreas, 09113 Chemnitz (DE)
(74) Representative: Jauregui Urbahn, Kristian
(86) International application number: PCT/EP2013/077469
(87) International publication number: WO 2014/096242

(56) References cited:
- EP-A1- 1 462 762
- DE-T2- 69 904 747
- FR-A1- 2 968 262
- US-A1- 2008 063 236
- US-B2- 7 696 894
- DENMAN S ET AL: "Object tracking using multiple motion modalities", 15 December 2008 (2008-12-15), SIGNAL PROCESSING AND COMMUNICATION SYSTEMS, 2008. ICSPCS 2008. 2ND INTERNATIONAL CONFERENCE ON, IEEE, PISCATAWAY, NJ, USA, PAGE(S) 1 - 10, XP031448759, ISBN: 978-1-4244-4243-0 the whole document
- DENMAN ET AL: "An adaptive optical flow technique for person tracking systems", 15 July 2007 (2007-07-15), PATTERN RECOGNITION LETTERS, ELSEVIER, AMSTERDAM, NL, PAGE(S) 1232 - 1239, XP022069309, ISSN: 0167-8655 the whole document

## Description

The invention relates to a method for tracking a target object in an environmental region of a motor vehicle based on a sequence of images of the environmental region, which are provided by means of a camera of the motor vehicle. The target object is detected in the environmental region and then tracked by means of an electronic image processing device based on the images, namely by determining optical flow vectors to the target object based on the sequence of images during a relative movement between the motor vehicle and the target object. In addition, the invention relates to a camera system for performing such a method as well as to a motor vehicle with such a camera system.

Camera systems for motor vehicles are already known from the prior art in manifold configuration. As is known, a camera system includes a camera disposed on the motor vehicle and capturing an environmental region of the motor vehicle. Multiple such cameras can also be employed, which capture the entire environment around the motor vehicle. The camera mounted on the motor vehicle then provides a sequence of images of the environmental region and thus captures a plurality of images per second. This sequence of images is then communicated to an electronic image processing device, which processes the images and is able to provide very different functionalities in the motor vehicle based on the images. Presently, the interest is directed to the detection and tracking of target objects located in the imaged environmental region. If such a target object is detected in the images, it can be tracked over the time in the sequence of images. This means that the current position of the target object relative to the motor vehicle is continuously determined based on the images. If a risk on the part of the target object is detected, the driver of the motor vehicle can be correspondingly warned. Optionally, the images can be displayed on a display and the detected target object can be provided with the so-called "bounding box" in order to thus allow the driver to be able to perceive and recognize the target object in the presented images without much effort.

For detecting and tracking a target object, usually, the so-called characteristic features are extracted from the images. These features can for example include corners and/or edges. E.g. the Harris points can be detected as the characteristic features, wherein other algorithms can alternatively also be applied, such as SIFT, SURF, ORB and the like.

If the characteristic features are extracted from the camera image, thus, the detection of actual target objects is for example effected based on these characteristic features. The characteristic features are divided in two groups in the further step: those features associated with the ground are classified as ground features, while those features associated with real target objects and thus to items with a certain height above the ground are classified as target features. The target features can then be used for detecting target objects. In order to perform such a classification, in particular, the optical flow method can be used, in which the so-called optical flow vector is determined to each characteristic feature based on two images. Based on the flow vectors, it can then be decided whether the respective characteristic features are target features or else ground features. In detail, this classification can for example be performed in this way: in addition to the flow vectors in the images, the current movement vector of the motor vehicle can also be acquired, which indicates the current velocity as well as the current direction of movement of the motor vehicle. Then, the flow vectors can be compared to the movement vector of the motor vehicle and the classification between ground features and target features can be performed depending on this comparison. Therein, the current movement vector of the motor vehicle can be subtracted from the optical flow vectors such that subtraction vectors are provided. These subtraction vectors can then be compared to the associated flow vectors. Due to the so-called parallax, the flow vectors associated with the actual target objects differ from the associated subtraction vectors in the direction and/or in the absolute value. In contrast, the flow vectors of the ground are substantially equal to the associated subtraction vectors. Thus, it can be determined, which flow vectors are associated with the ground or with objects with a height located on the ground, as well as which vectors are associated with target objects, which are standing on the ground and therefore present potential obstacles.

Usually, the tracking of the target object in the environmental region is also effected based on the optical flow vectors. However, the above mentioned classification and detection of the target object based on the flow vectors is possible exclusively with relative movement between the motor vehicle and the target object. Accordingly, target objects can be tracked without problem in three different situations: if exclusively the motor vehicle moves and the target object is stationary (relative to the ground); if exclusively the target object moves and the motor vehicle is stationary (relative to the ground); as well as if both the motor vehicle and the target object move (relative to the ground). If standstill of the motor vehicle and of the target object occurs, flow vectors cannot be calculated to this target object and the target object is "lost" and thus cannot be tracked anymore. However, such a static target object can also present a potential risk to the motor vehicle.

It is an object of the invention to demonstrate a solution how in a method of the initially mentioned kind the tracking of the target object can be effected more precisely and reliably than in the prior art such that in particular the driver of the motor vehicle can be reliably warned of the presence of obstacles in the environmental region of the motor vehicle

According to the invention, this object is solved by a method, according to claim 1 by a camera system according to claim 9 as well as by a motor according to claim 10 having the features according to the respective independent claims. Advantageous implementations of the invention are the subject matter of the dependent claims, of the description and of the figures.

A method according to the invention serves for tracking a target object in an environmental region of a motor vehicle based on a sequence of images of the environmental region. The images are provided by means of a camera of the motor vehicle. First, the target object is detected. The target object is tracked by means of an electronic image processing device by determining optical flow vectors based on the sequence of images during a relative movement between the motor vehicle and the target object. A stationary state is detected, in which both the motor vehicle and the target object come to a standstill (relative to the ground and thus relative to a road). After detecting the stationary state, the current relative position of the target object with respect to the motor vehicle is stored. Then, it is examined if a predetermined criterion with respect to the relative movement between the motor vehicle and the target object is satisfied by defining an object validation counter (TC), which is incremented or decremented depending on a current movement state (VS, VN, VM) of the motor vehicle (1) and/or depending on a current movement state (OS, ON, OM) of the target object (5) and/or depending on whether or not the target object (5) is detected based on current images of the camera (3) (+D, -D), wherein the tracking of the target object (5) is continued if the object validation counter (TC) exceeds a preset counter limit value. If the criterion is satisfied, the tracking of the target object is resumed starting from the stored relative position.

The invention is based on several realizations: first, it is based on the realization that target objects in the environmental region can be tracked based on optical flow vectors in the sequence of images, but these optical flow vectors can only be determined with a relative movement between the motor vehicle and the target object. A further realization is in that in a stationary state, in which both the motor vehicle and the target object are stationary, flow vectors cannot be determined to this target object on the one hand and the characteristic features of the target object cannot be differentiated from other image features associated with the ground itself on the other hand. In the prior art, the target object therefore can no longer be tracked in the stationary state and thus is "deleted" by the tracking algorithm. Further, the invention builds on the realization that these disadvantages of the prior art can be avoided in that after detection of the stationary state the previously detected and tracked target object is stored in the memory of the image processing device, and it is continuously examined whether or not the same target object can further be tracked based on the optical flow vectors. The predetermined criterion with respect to the relative movement is continuously examined and after satisfaction of this criterion, continuation of the tracking of the same target object based on the stored information occurs. Thus, even in the stationary state, it is not lost sight of the target object, but this target object is furthermore monitored to the effect if it can again be tracked depending on the optical flow vectors. Thus, the driver can be more reliably warned of the presence of this target object in the environmental region than in the prior art and the tracking of the target object is overall more precisely and reliably effected.

Preferably, the tracking of the target object is resumed and continued based on the stored information if at least the motor vehicle or the target object or both move. Especially then, new flow vectors can be calculated to the target object, which can be differentiated from the flow vectors of the ground and used for fresh tracking of the target object.

Whether or not the motor vehicle has come to a standstill is preferably assessed based on the current velocity of the motor vehicle. The image processing device can receive the current value of the vehicle velocity for example via a communication bus of the motor vehicle, such as for example via the CAN bus. Thus, it is possible without much effort to detect whether or not the motor vehicle comes to a standstill. Therein, the interface to the CAN bus usually present anyway is used such that additional interfaces between the camera on the one hand and the vehicle components on the other hand are not required.

It proves advantageous if the standstill of the motor vehicle is assumed if the current value of the velocity of the motor vehicle is less than a preset first velocity value (>0). In contrast, a movement of the motor vehicle can be assumed if the current value of the vehicle velocity is greater than a preset second velocity limit value. Preferably, the second velocity limit value is therein different from the first velocity limit value, wherein the second velocity limit value is preferably greater than the first velocity limit value. By such an approach, a hysteresis is virtually provided, which provides for robust detection of the standstill of the motor vehicle. If the current vehicle velocity is between the first and the second velocity limit value, thus, it can also be provided that the current movement state of the motor vehicle is classified as "unknown", which can also be taken into account in examining the above mentioned criterion.

Therein, the standstill of the motor vehicle is preferably only assumed if the current value of the velocity is less than the first velocity limit value at least for a preset first time interval. Movement of the motor vehicle also can only be assumed if the current value of the velocity is greater than the second velocity limit value for at least a preset second time interval. This second time interval is preferably equal to the first time interval. This provides for additional robustness in determining the current movement state of the motor vehicle, in particular if the current value of the vehicle velocity is received via the CAN bus. Namely, delay in communicating the velocity values usually occurs at the CAN bus and in addition these values are not always highly accurate. By providing the first and the second time interval, thus, the determination of the current movement state of the motor vehicle can be more stably and reliably performed.

Apart from the current movement state of the motor vehicle, the current movement state of the target object can also be determined. This movement state of the target object is preferably determined depending on the current movement state of the motor vehicle as well as depending on whether or not the target object can be detected based on current images of the camera, in particular based on optical flow vectors. If for example a standstill of the motor vehicle is detected and if the target object can be detected based on optical flow vectors, thus, this indicates that the target object moves. During movement of the motor vehicle too, it can be determined whether or not the target object moves or stands still based on the current flow vectors of the target object. Generally, the movement state of the target object, thus its standstill and/or a new movement of the target object, can be detected depending on the current movement state of the motor vehicle as well as depending on the images of the camera.

As already explained above, the target object can be again tracked based on the optical flow vectors if the mentioned predetermined criterion is satisfied, in particular if at least the motor vehicle and/or the target object again move. In detail, this is preferably implemented such that an object validation counter is defined, which is incremented or decremented depending on a current movement state of the motor vehicle and/or depending on a current movement state of the target object and/or depending on whether or not the target object can be detected based on current images of the camera. Preferably, the tracking of the target object is resumed if the object validation counter exceeds a predetermined counter limit value. Depending on the respective movement states, thus, it can be examined without much computational effort whether or not the mentioned criterion is satisfied and thus whether or not the target object can again be tracked based on the optical flow vectors in the sequence of images.

The incrementing and decrementing of the object validation counter can for example be performed as follows:
The object validation counter can be incremented at least if:
   - with a detected standstill of the target object, the motor vehicle is interpreted as moved and additionally detection of the target object based on flow vectors of the camera is present, and/or
   - with a detected standstill of the motor vehicle, movement of the target object is detected and additionally detection of a target object based on current flow vectors is present, and/or
   - both the target object and the motor vehicle are interpreted as moved and additionally detection of the target object based on current flow vectors is present.

Especially in these cases, it can be assumed that the above mentioned criterion is satisfied and the target object thus can again be detected and tracked based on optical flow vectors.

In contrast, decrementing the object validation counter is preferably effected at least if the target object and/or the motor vehicle is interpreted as moved and detection of the target object based on current images is not possible. This indicates that the target object is no longer in the imaged environmental region.

It can also be provided that the object validation counter is maintained constant at the previous value if detection of the target object based on current images of the camera is not present with the detected standstill of the motor vehicle. Here, it is also assumed that neither the motor vehicle nor the target object moves and it is waited until this state again changes. Therein, the maintenance of the previous value of the object validation counter implies that the target object further remains in the memory of the image processing device in the detected stationary state and can be again tracked based on the current flow vectors after satisfaction of the predetermined criterion.

In addition, the invention relates to a camera system for performing a method according to the invention. A motor vehicle according to the invention, in particular a passenger car, includes a camera system according to the invention. The preferred embodiments presented with respect to the method according to the invention and the advantages thereof correspondingly apply to the camera system according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone. The scope of the invention is determined by the terms of the appended claims.

Now, the invention is explained in more detail based on a preferred embodiment as well as with reference to the attached drawings.

There show:
- Fig. 1: in schematic illustration a side view of a motor vehicle according to an embodiment of the invention;
- Fig. 2a a. 2b: a state diagram for explaining the detection of a current movement state of the motor vehicle according to a first example;
- Fig. 3a a. 3b: a state diagram according to a second example;
- Fig. 4a a. 4b: a state diagram according to a third example, and
- Fig. 5: a state diagram for explaining the detection of a current movement state of a target object as well as for examining if a predetermined criterion with respect to a relative movement between motor vehicle and target object is satisfied.

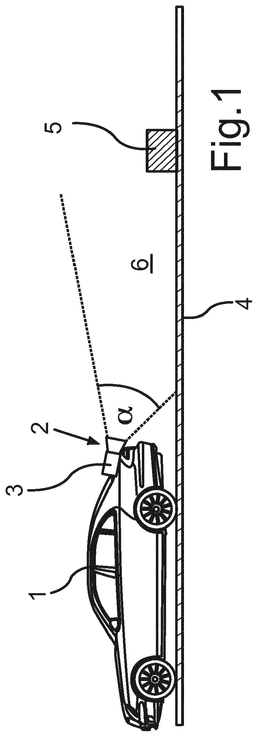

In Fig. 1, in schematic illustration, a side view of a motor vehicle 1 according to an embodiment of the invention is illustrated. The motor vehicle 1 is for example a passenger car. It has a camera system 2 including a camera 3, in particular a mono camera. The motor vehicle 1 is on a road 4, which at the same time also represents a ground (soil). On the ground 4, there is additionally a target object 5, i.e. an obstacle with a certain height above the ground 4.

For example, the camera system 2 is a collision warning system and serves for warning the driver of the motor vehicle 1 of the target object 5, which is located in an environmental region 6 of the motor vehicle 1. The camera system 2 in particular serves for detecting the target object 5 as well as for tracking the target object 5 in the environmental region 6. Images of the environmental region 6 are provided by means of the camera 3, which are subsequently processed by means of a not illustrated electronic image processing device (digital signal processor). The image processing device receives the images and additionally also for example information about the current movement of the motor vehicle 1, namely in particular via the CAN bus. In particular the current velocity of the motor vehicle 1 and optionally also the current steering angle and/or the current direction of movement of the motor vehicle 1 belong to this information.

The camera 3 has a capturing angle or opening angle α, which can for example be in a range of values from 90° to 200°. The camera 3 can be a CMOS camera or else a CCD camera or another image capturing device, which is formed for detecting light in the visible spectral range and from the images of which optical flow vectors can be extracted.

In the embodiment according to Fig. 1, the camera 3 is disposed in a rear region of the motor vehicle 1 and captures the environmental region 6 behind the motor vehicle 1. However, the invention is not restricted to such an arrangement of the camera 3. The arrangement of the camera 3 can be different according to embodiment. For example, the camera 3 or another camera can also be disposed in a front region of the motor vehicle 1 and capture the environmental region in front of the motor vehicle 1. Multiple such cameras 3 can also be employed, which are each formed for detecting a target object 5.

The camera 3 is a video camera, which continuously provides a sequence of frames. Then, the electronic image processing device processes the image sequence in real time and can detect and track the target object 5 based on this image sequence. Optionally, the current images can also be presented on a display in the motor vehicle 1.

The mentioned image processing device can optionally be integrated in the camera 3. Alternatively, it can be a separate component.

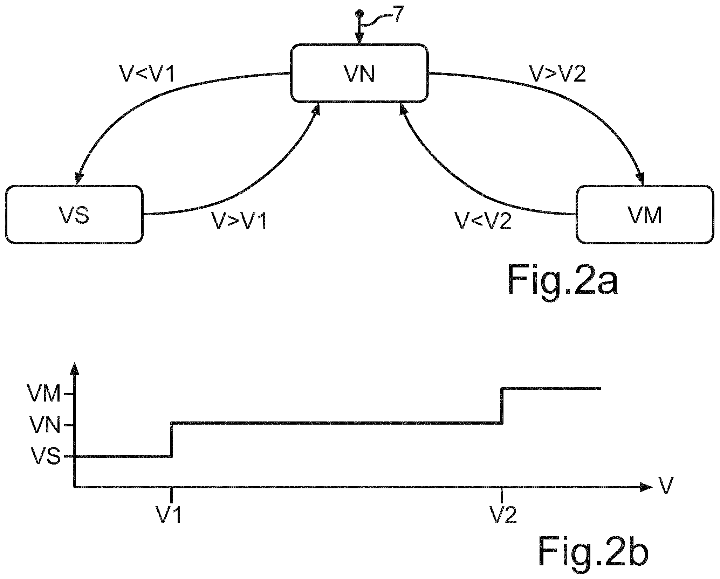

The detection of the target object 5 can be effected as follows: based on each two images of the camera 3, the image processing device can determine optical flow vectors and then detect these flow vectors associated with the target object 5. This differentiation is effected e.g. considering the current movement vector of the motor vehicle 1 determined from the current velocity and the current direction of movement of the motor vehicle 1. If subtraction vectors are calculated by subtraction of the movement vector of the motor vehicle 1 from the flow vectors, thus, differentiation between the flow vectors of the target object 5 on the one hand and the flow vectors of the ground 4 on the other hand can be made based on the subtraction vectors. However, such a differentiation is only possible if at least one of the objects (motor vehicle 1 and/or target object 5) moves. In contrast, if both the motor vehicle 1 and the target object 5 are stationary, such detection of the target object 5 solely based on the optical flow vectors is not possible. For this reason, it is now proposed to detect such a stationary state, in which both the motor vehicle 1 and the target object 5 come to a standstill, and to further maintain the target object 5 in the memory in this stationary state. If it is then detected that a predetermined criterion with respect to the relative movement between the motor vehicle 1 and the target object 5 is satisfied, thus, the tracking of the target object 5 is continued based on the current optical flow vectors. The tracking algorithm thus examines if the tracking of the target object 5 can be resumed and again continues the tracking of the target object 5 if the mentioned criterion is satisfied. This criterion implies that the motor vehicle 1 and/or the target object 5 again move. Such a method according to an embodiment of the invention is now explained in more detail with reference to Fig. 2 to 5:

With reference to Fig. 2a and 2b, first, it is explained how the current movement state of the motor vehicle 1 is detected. The image processing device receives the current values of the vehicle velocity V via a communication bus of the motor vehicle 1, namely in particular via the CAN bus. Two velocity limit values V1 and V2 are stored in the image processing device, wherein V2 > V1. Three different movement states of the motor vehicle 1 are possible: a standstill VS ("vehicle standstill"), a detected movement VM ("vehicle movement") as well as a neutral state VN ("movement state unknown "). The method starts in the state VN as it is indicated with an initialization arrow 7. Then, the image processing device examines whether the current vehicle velocity V is less than the first velocity limit value V1 or greater than the second velocity limit value V2 or else is between the two limit values V1 and V2. If the velocity V falls below the first velocity limit value V1, the standstill VS is assumed, such that the standstill of the motor vehicle is detected. If the current vehicle velocity again exceeds the first velocity limit value V1, the neutral state VN is again assumed, which implies that the current movement state of the motor vehicle 1 is unknown. If the current vehicle velocity V exceeds the second velocity limit value V2, thus, movement of the motor vehicle 1 can be assumed and the motor vehicle 1 is interpreted as moved (state VM). If the current velocity V is again below the second velocity limit value V2, the neutral state VN is again assumed.

This detection of the current movement state of the motor vehicle 1 is also illustrated based on a function in Fig. 2b.

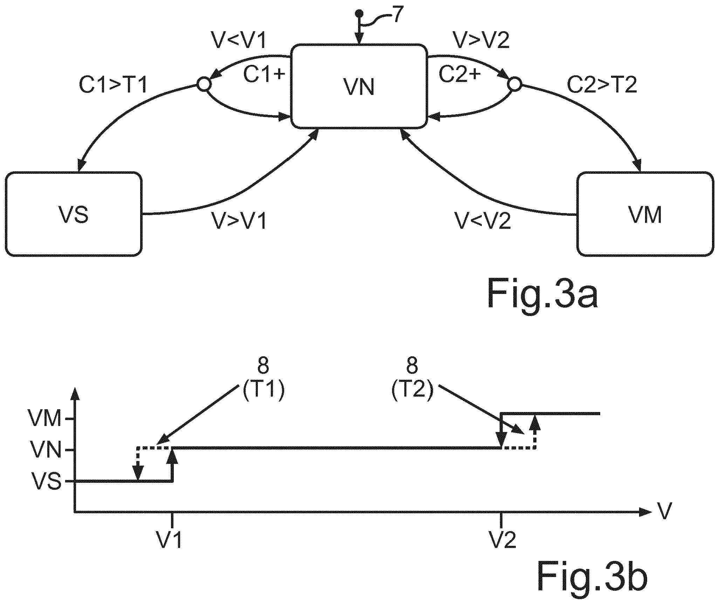

However, in some motor vehicles, it can occur that a delay between the information from the CAN bus and the video data of the camera 3 is determined. In these cases, movement of the motor vehicle 1 can be determined based on the image sequence although a vehicle velocity V is communicated via the CAN bus, which is less than the velocity limit value V1 or is even 0. Thus, delays in communicating the current vehicle velocity V via the CAN bus occur. For this reason, a predetermined time interval can additionally also be taken into account in the detection of the current movement state of the motor vehicle 1. Such an example is illustrated in the Fig. 3a and 3b. It substantially corresponds to the example according to Fig. 2a and 2b, but with the difference that counters C1 and C2 are implemented. If the current vehicle velocity V falls below the first velocity limit value V1, thus, a first counter C1 is incremented. If the counter C1 exceeds a preset first time interval T1, thus, the standstill VS is assumed. If the current vehicle velocity V is again greater than the first velocity limit value V1, thus, the neutral state VN is again assumed. Correspondingly, with a second counter C2, the period of time is calculated, for which the current vehicle velocity V is above the second velocity limit value V2. If a preset second time interval T2 is exceeded, movement of the motor vehicle 1 is detected (VM). The two time intervals T1, T2 can also be identical time intervals such that T1 = T2.

This state machine is illustrated also in Fig. 3b in another representation. Here, the progress corresponds to the progress according to Fig. 2b, but with the difference that additional hysteresis is provided by delays 8 - caused by the time intervals T1, T2. This is schematically illustrated in Fig. 3b.

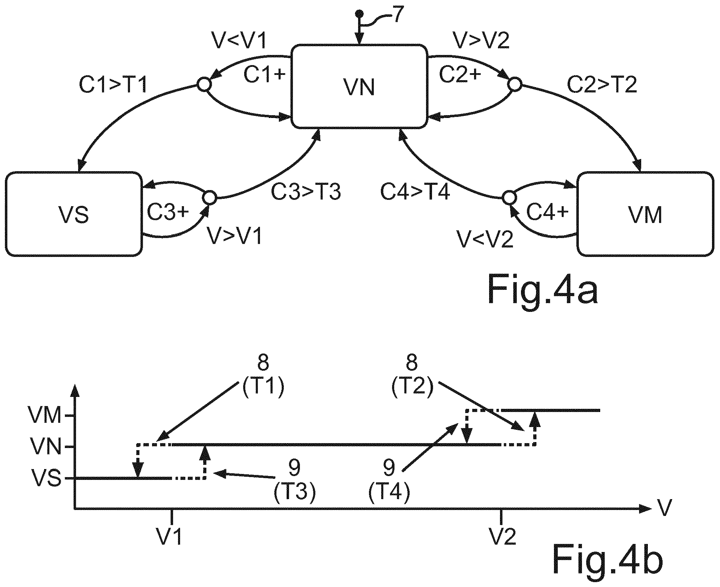

A further example for determining the current movement state of the motor vehicle 1 is illustrated in Fig. 4a and 4b. Compared to the example according to Fig. 3a and 3b, here, an additional delay in switching from the states VS and VM to the state VN is taken into account. If the state machine is in the state VS and if the current vehicle velocity V exceeds the first velocity limit value V1, thus, the period of time, for which the velocity V is greater than V1, is measured with the aid of a counter C3. If the counter C3 exceeds a preset third time interval T3, thus, the neutral state VN is assumed. And also in the state VM, a counter C4 is implemented, by which the period of time is acquired, for which the current vehicle velocity V is less than the second velocity limit value V2. If a fourth time interval T4 is exceeded, the neutral state VN is assumed. Thus, additional hystereses and delays are added, which are schematically denoted by 9 in Fig. 4b. The following relation can apply: T1 = T2 = T3 = T4.

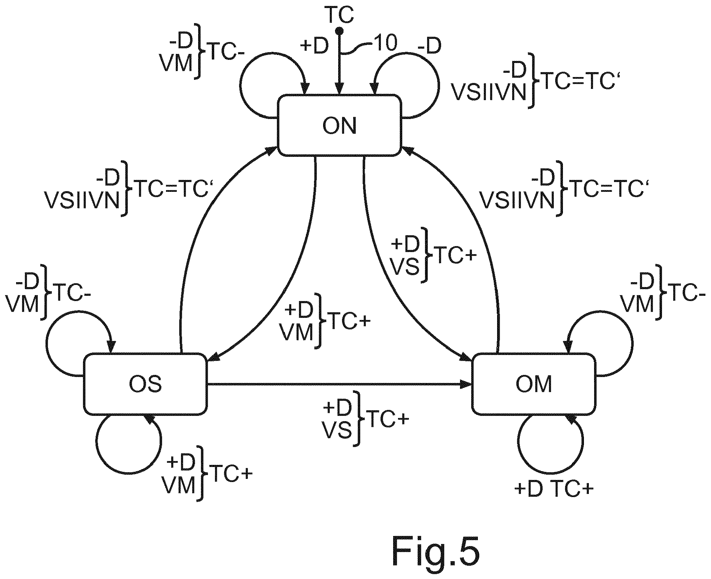

Thus, the image processing device knows the current movement state of the motor vehicle 1 and differentiates between three states VS, VN and VM. With reference to Fig. 5, a further state machine is explained in more detail, which serves for determining the current movement state of the target object 5 as well as for examining whether or not the above mentioned criterion is satisfied. As already explained, this criterion implies that at least one of the objects 1 and/or 5 again moves. The criterion is implemented such that an object validation counter TC is defined. If this object validation counter TC exceeds a predetermined limit value, thus it is assumed that the criterion is satisfied. In this case, the target object 5 is again taken as a basis for the tracking algorithm and the tracking of the target object 5 is continued starting from the stored relative position.

According to Fig. 5, it is differentiated between three different movement states of the target object 5, namely between a standstill OS ("object standstill"), a movement OM of the target object 5 ("object movement") as well as a neutral state ON, in which the movement state of the target object 5 is classified as "unknown". As indicated by an arrow 10, the method begins in the neutral state ON. Here, the target object 5 is for example detected based on optical flow vectors in the images and/or by means of another sensor such as for example a distance sensor, in particular an ultrasonic sensor. Thus, a positive detection D of the target object 5 is present. As already explained, an object validation counter TC is implemented, which is first set to a default value (e.g. 0). Starting from the neutral state ON, now, the following steps are possible:
If detection of the target object 5 based on flow vectors is not present (as it is denoted by "-D" in Fig. 5) and if the motor vehicle 1 is in the state VS or VN, thus, the previous value of the object validation counter TC is maintained constant such that TC = TC' (here, TC' denotes the previous value). This means that the once detected target object 5 remains in the memory of the image processing device and new tracking of the target object 5 is possible.

However, if it is determined in the state ON that detection is not present (-D) and the motor vehicle 1 moves (VM), thus, the object validation counter TC is decremented (TC-). If the motor vehicle 1 moves, thus, the detections of the target object 5 also are to be possible based on flow vectors. If this is not the case, thus, the counter TC is decremented.

Switching from the state ON to the state OS is effected if detection D is currently present (+D) and additionally the state VM of the motor vehicle 1 is detected. The object validation counter TC is incremented. If the motor vehicle 1 moves, namely, flow vectors of the target object 5 can thus be detected and further tracking of the target object is possible.

Switching from the neutral state ON to the state OM is also possible. This is effected on condition that detection is present (+D) in the state ON and the standstill VS of the motor vehicle 1 is detected. The object validation counter TC is incremented (TC+). Namely, if detections based on flow vectors are present and the motor vehicle 1 is stationary, thus, the target object 5 can be tracked based on the flow vectors such that the object validation counter TC can be incremented.

If the state machine is in the state OS, thus, the following steps are possible: if a detection is further determined (+D) and if the motor vehicle 1 further moves (VM), thus, the state machine remains in the state OS and the object validation counter TC is incremented (TC+). However, if it is determined in the moved state VM of the motor vehicle 1 that detections are not present (-D), thus, the object validation counter TC is decremented (TC-).

Starting from the state OS, switching to the state OM is possible. This switching is effected on condition that a detection of the target object 5 is present (+D) on the one hand and the standstill VS of the motor vehicle 1 is detected on the other hand. Here, the object validation counter TC is incremented (TC+). Starting from the state OS, switching to the state ON is also possible, namely on condition that detection of the target object 5 is not present (-D) and the motor vehicle 1 is in the state VS or VN. In this case, the previous value of the object validation counter TC is maintained (TC = TC').

If the state machine is in the state OM, thus, the following steps are possible: if detection is not present (-D) and if the motor vehicle is in the moved state VM, thus, the state machine remains in the state OM and the object validation counter TC is decremented (TC-). If the motor vehicle 1 and the target object 5 move, thus, detection of the target object 5 based on optical flow vectors also should be possible. If this is not the case, thus, the object validation counter TC is decremented. If detections are present (+D), thus, the object validation counter TC is incremented (TC+) independently of whether or not the motor vehicle 1 itself moves.

The state machine goes from the state OM to the state ON if detections are not present (-D) at the current time and the motor vehicle 1 is in the state VS or VN. Here, the previous value of the object validation counter TC is kept constant, such that TC = TC'. If the motor vehicle 1 does not move and additionally detections are not present, thus, the state of the target object 5 is unknown and it is to be waited until the target object 5 can again be tracked.

As is apparent from the illustration according to Fig. 5, the target object 5 can be tracked based on the current flow vectors as long as movement of the motor vehicle 1 and/or of the target object 5 is present. If the motor vehicle 1 does not move and if detections are not given, thus, the movement state of the target object 5 is classified as unknown and it is awaited until the target object 5 can again be detected or else the motor vehicle 1 again moves.

It can also occur that the motor vehicle 1 moves relatively slowly, namely with a velocity V < V2. The movement state of the motor vehicle 1 is here classified as VS or VN, although the motor vehicle 1 indeed moves (albeit only slowly). In this case, detections of the target object 5 are not possible if the same target object 5 is stationary. In this case, the current position of the target object 5 with respect to the motor vehicle 1 can be continuously determined for example based on positional data of a navigation system (e.g. GPS) and/or based on evaluation of the CAN information by means of odometry. The relative position of the target object 5 stored upon detection of the stationary state can therefore be continuously adapted, namely even if the states VS, VN of the motor vehicle 1 are detected and the target object 5 is stationary. Here, detections based on the flow vectors are not possible, but the current relative position can still be updated.

## Claims

1. Method for tracking a target object (5) in an environmental region (6) of a motor vehicle (1) based on a sequence of images of the environmental region (6), which are provided by means of a camera (3) of the motor vehicle (1), including the steps of:
- detecting the target object (5) in the environmental region (6) by extracting characteristic features from an image including corners and/or edges, and
- tracking the target object (5) by means of an electronic image processing device by determining optical flow vectors to the target object (5) based on the sequence of images during a relative movement between the motor vehicle (1) and the target object (5),
**characterized by**
- detecting a stationary state, in which both the motor vehicle (1) and the target object (5) come to a standstill,
- after detecting the stationary state, storing the current relative position of the target object (5) with respect to the motor vehicle (1), and
- examining if a predetermined criterion with respect to the relative movement is satisfied by defining an object validation counter (TC) to be incremented or decremented depending on a current movement state (VS, VN, VM) of the motor vehicle (1) and/or depending on a current movement state (OS, ON, OM) of the target object (5) and/or depending on whether or not the target object (5) is detected based on current images of the camera (3) (+D, -D), wherein the tracking of the target object (5) is continued if the object validation counter (TC) exceeds a preset counter limit value by tracking of the target object (5) starting from the stored relative position
the tracking of the target object (5) is resumed if
- at least the motor vehicle (1) or the target object (5) again moves, or
- both the motor vehicle (1) and the target object (5) again move.

2. Method according to claim 1,
**characterized in that**
the current value of a velocity (V) of the motor vehicle (1) is received by the image processing device via a communication bus of the motor vehicle (1).

3. Method according to any one of the preceding claims,
**characterized in that**
the standstill of the motor vehicle (1) is assumed if the current value of a velocity (V) of the motor vehicle (1) is less than a preset first velocity limit value (V1), and/or that the motor vehicle (1) is interpreted as moved if the current value of the velocity (V) of the motor vehicle (1) is greater than a preset second velocity limit value (V2).

4. Method according to claim 3,
**characterized in that**
the standstill of the motor vehicle (1) is only assumed if the current value of the velocity (V) is less than the first velocity limit value (V1) for at least a preset first time interval (T1), and/or that the motor vehicle (1) is only interpreted as moved if the current value of the velocity (V) is greater than the second velocity limit value (V2) for at least a preset second time interval (T2).

5. Method according to any one of the preceding claims,
**characterized in that**
the standstill and/or a new movement of the target object (5) are detected depending on a current movement state of the motor vehicle (1) as well as depending on the images.

6. Method according to any one of the preceding claims,
**characterized in that**
the object validation counter (TC) is incremented at least if
- with a detected standstill (OS) of the target object (5), the motor vehicle (1) is interpreted as moved and additionally detection (D) of the target object (5) based on current images of the camera (3) is present, and/or
- with a detected standstill (VS) of the motor vehicle (1), the target object (5) is interpreted as moved and additionally detection (D) of the target object (5) based on current images of the camera (3) is present, and/or
- both the target object (5) and the motor vehicle (1) are interpreted as moved and additionally detection (D) of the target object (5) based on current images of the camera (3) is present.

7. Method according to any one of the preceding claims,
**characterized in that**
the object validation counter (TC) is decremented at least if the target object (5) and/or the motor vehicle (1) are interpreted as moved and detection (-D) of the target object (5) based on current images of the camera (3) is not present.

8. Method according to any one of the preceding claims,
**characterized in that**
the object validation counter (TC) is maintained constant at the previous value (TC') if detection (-D) of the target object (5) based on current images of the camera (3) is not present with the detected standstill (VS) of the motor vehicle (1).

9. Camera system (2) for a motor vehicle (1), including a camera (3) for providing a sequence of images of an environmental region (6) of the motor vehicle (1), and including an electronic image processing device, which is adapted to
- detect a target object (5) in the environmental region (6) by extracting characteristic features from an image including corners and/or edges, and
- track the target object (5) by determining optical flow vectors to the target object (5) based on the sequence of images during a relative movement between the motor vehicle (1) and the target object (5),
**characterized in that**
the image processing device is adapted to
- detect a stationary state, in which both the motor vehicle (1) and the target object (5) come to a standstill,
- after detecting the stationary state, store the current relative position of the target object (5) with respect to the motor vehicle (1), and
- examine if a predetermined criterion with respect to the relative movement is satisfied by defining an object validation counter (TC) to be incremented or decremented depending on a current movement state (VS, VN, VM) of the motor vehicle (1) and/or depending on a current movement state (OS, ON, OM) of the target object (5) and/or depending on whether or not the target object (5) is detected based on current images of the camera (3) (+D, -D), wherein the tracking of the target object (5) is continued if the object validation counter (TC) exceeds a preset counter limit value by tracking of the target object (5) starting from the stored relative position
the tracking of the target object (5) is resumed if
- at least the motor vehicle (1) or the target object (5) again moves, or both the motor vehicle (1) and the target object (5) again move.

10. Motor vehicle (1) with a camera system (2) according to claim 9.

## Patentansprüche

1. Verfahren zur Verfolgung eines Zielobjekts (5) in einer Umgebungsregion (6) eines Kraftfahrzeugs (1), basierend auf einer Sequenz von Bildern der Umgebungsregion (6), die mittels einer Kamera (3) des Kraftfahrzeugs (1) bereitgestellt werden, und das folgende Schritte beinhaltet:
- Erkennen des Zielobjekts (5) in der Umgebungsregion (6) durch Extrahieren charakteristischer Merkmale aus einem Bild, einschließlich Ecken und/oder Kanten, und
- Verfolgen des Zielobjekts (5) mittels einer elektronischen Bildverarbeitungsvorrichtung durch Bestimmen optischer Fließvektoren zu dem Zielobjekt (5) auf der Grundlage der Sequenz von Bildern während einer relativen Bewegung zwischen dem Kraftfahrzeug (1) und dem Zielobjekt (5),
**gekennzeichnet durch**
- Erkennen eines Stillstandszustands, in dem sowohl das Kraftfahrzeug (1) als auch das Zielobjekt (5) zu einem Stillstand kommen,
- nach Erkennen des Stillstandszustands, Speichern der aktuellen relativen Position des Zielobjekts (5) in Bezug auf das Kraftfahrzeug (1), und
- Prüfen, ob mit Bezug auf die relative Bewegung ein vorbestimmtes Kriterium erfüllt ist, durch Definieren eines Objektvalidierungszählers (TC), der in Abhängigkeit von einem aktuellen Bewegungszustand (VS, VN, VM) des Kraftfahrzeugs (1) und/oder in Abhängigkeit von einem aktuellen Bewegungszustand (OS, ON, OM) des Zielobjekts (5) und/oder in Abhängigkeit davon, ob das Zielobjekt (5) auf der Grundlage aktueller Bilder der Kamera (3) (+D, -D) erkannt wird, erhöht oder verringert wird, wobei die Verfolgung des Zielobjekts (5) fortgesetzt wird, wenn der Objektvalidierungszähler (TC) einen voreingestellten Zählergrenzwert überschreitet, indem das Zielobjekt (5) beginnend ab der gespeicherten relativen Position verfolgt wird,
wobei die Verfolgung des Zielobjekts (5) wieder aufgenommen wird, wenn
- sich mindestens das Kraftfahrzeug (1) oder das Zielobjekt (5) erneut bewegt, oder
- sich sowohl das Kraftfahrzeug (1) als auch das Zielobjekt (5) erneut bewegen.

2. Verfahren nach Anspruch 1, **dadurch gekennzeichnet, dass**
der aktuelle Wert einer Geschwindigkeit (Velocity, V) des Kraftfahrzeugs (1) von der Bildverarbeitungsvorrichtung über einen Kommunikationsbus des Kraftfahrzeugs (1) empfangen wird.

3. Verfahren nach einem der vorangehenden Ansprüche, **dadurch gekennzeichnet, dass**
der Stillstand des Kraftfahrzeugs (1) angenommen wird, wenn der aktuelle Wert einer Geschwindigkeit (V) des Kraftfahrzeugs (1) kleiner als ein voreingestellter erster Geschwindigkeitsgrenzwert (V1) ist, und/oder dadurch, dass das Kraftfahrzeug (1) als bewegt interpretiert wird, wenn der aktuelle Wert der Geschwindigkeit (V) des Kraftfahrzeugs (1) größer als ein voreingestellter zweiter Geschwindigkeitsgrenzwert (V2) ist.

4. Verfahren nach Anspruch 3, **dadurch gekennzeichnet, dass**
der Stillstand des Kraftfahrzeugs (1) nur angenommen wird, wenn der aktuelle Wert der Geschwindigkeit (V) für mindestens ein voreingestelltes erstes Zeitintervall (T1) kleiner als der erste Geschwindigkeitsgrenzwert (V1) ist, und/oder dadurch, dass das Kraftfahrzeug (1) nur als bewegt interpretiert wird, wenn der aktuelle Wert der Geschwindigkeit (V) für mindestens ein voreingestelltes zweites Zeitintervall (T2) größer als der zweite Geschwindigkeitsgrenzwert (V2) ist.

5. Verfahren nach einem der vorangehenden Ansprüche, **dadurch gekennzeichnet, dass**
der Stillstand und/oder eine neue Bewegung des Zielobjekts (5) in Abhängigkeit von einem aktuellen Bewegungszustand des Kraftfahrzeugs (1) sowie in Abhängigkeit von den Bildern erkannt werden.

6. Verfahren nach einem der vorangehenden Ansprüche, **dadurch gekennzeichnet, dass**
der Objektvalidierungszähler (TC) mindestens dann erhöht wird, wenn
- bei einem erkannten Stillstand (OS) des Zielobjekts (5) das Kraftfahrzeug (1) als bewegt interpretiert wird und zusätzlich eine Erkennung (Detection, D) des Zielobjekts (5) auf der Grundlage aktueller Bilder der Kamera (3) präsent ist, und/oder
- bei einem erkannten Stillstand (VS) des Kraftfahrzeugs (1) das Zielobjekt (5) als bewegt interpretiert wird und zusätzlich eine Erkennung (D) des Zielobjekts (5) auf der Grundlage aktueller Bilder der Kamera (3) präsent ist, und/oder
- sowohl das Zielobjekt (5) als auch das Kraftfahrzeug (1) als bewegt interpretiert werden und zusätzlich eine Erkennung (D) des Zielobjekts (5) auf der Grundlage aktueller Bilder der Kamera (3) präsent ist.

7. Verfahren nach einem der vorangehenden Ansprüche, **dadurch gekennzeichnet, dass**
der Objektvalidierungszähler (TC) mindestens dann verringert wird, wenn das Zielobjekt (5) und/oder das Kraftfahrzeug (1) als bewegt interpretiert werden und eine Erkennung (-D) des Zielobjekts (5) auf der Grundlage aktueller Bilder der Kamera (3) nicht präsent ist.

8. Verfahren nach einem der vorangehenden Ansprüche, **dadurch gekennzeichnet, dass**
der Objektvalidierungszähler (TC) konstant bei dem vorhergehenden Wert (TC') gehalten wird, wenn eine Erkennung (-D) des Zielobjekts (5) basierend auf aktuellen Bildern der Kamera (3) bei dem erkannten Stillstand (VS) des Kraftfahrzeugs (1) nicht präsent ist.

9. Kamerasystem (2) für ein Kraftfahrzeug (1), das eine Kamera (3) zum Bereitstellen einer Sequenz von Bildern einer Umgebungsregion (6) des Kraftfahrzeugs (1) beinhaltet, und das eine elektronische Bildverarbeitungsvorrichtung beinhaltet, die dazu ausgelegt ist,
- ein Zielobjekt (5) in der Umgebungsregion (6) durch Extrahieren charakteristischer Merkmale aus einem Bild, einschließlich Ecken und/oder Kanten, zu erkennen, und
- das Zielobjekt (5) durch Bestimmen optischer Fließvektoren zu dem Zielobjekt (5) auf der Grundlage der Sequenz von Bildern während einer relativen Bewegung zwischen dem Kraftfahrzeug (1) und dem Zielobjekt (5) zu verfolgen,
**dadurch gekennzeichnet, dass** die Bildverarbeitungsvorrichtung dazu ausgelegt ist,
- einen Stillstandszustand, in dem sowohl das Kraftfahrzeug (1) als auch das Zielobjekt (5) zu einem Stillstand kommen, zu erkennen,
- nach Erkennen des Stillstandszustands die aktuelle relative Position des Zielobjekts (5) in Bezug auf das Kraftfahrzeug (1) zu speichern, und
- zu prüfen, ob mit Bezug auf die relative Bewegung ein vorbestimmtes Kriterium erfüllt ist, durch Definieren eines Objektvalidierungszählers (TC), der in Abhängigkeit von einem aktuellen Bewegungszustand (VS, VN, VM) des Kraftfahrzeugs (1) und/oder in Abhängigkeit von einem aktuellen Bewegungszustand (OS, ON, OM) des Zielobjekts (5) und/oder in Abhängigkeit davon, ob das Zielobjekt (5) auf der Grundlage aktueller Bilder der Kamera (3) (+D, -D) erkannt wird, erhöht oder verringert wird, wobei die Verfolgung des Zielobjekts (5) fortgesetzt wird, wenn der Objektvalidierungszähler (TC) einen voreingestellten Zählergrenzwert überschreitet, indem das Zielobjekt (5) beginnend ab der gespeicherten relativen Position verfolgt wird,
wobei die Verfolgung des Zielobjekts (5) wieder aufgenommen wird, wenn
- sich mindestens das Kraftfahrzeug (1) oder das Zielobjekt (5) erneut bewegt, oder sich sowohl das Kraftfahrzeug (1) als auch das Zielobjekt (5) erneut bewegen.

10. Kraftfahrzeug (1) mit einem Kamerasystem (2) nach Anspruch 9.

## Revendications

1. Procédé de suivi d'un objet cible (5) dans une région environnementale (6) d'un véhicule à moteur (1) sur la base d'une séquence d'images de la région environnementale (6), qui sont obtenues au moyen d'une caméra (3) du véhicule à moteur (1), comportant les étapes consistant à :
- détecter l'objet cible (5) dans la région environnementale (6) en extrayant des éléments caractéristiques d'une image comportant des coins et/ou des bords, et
- suivre l'objet cible (5) au moyen d'un dispositif électronique de traitement d'images en déterminant des vecteurs de flux optique de l'objet cible (5) sur la base de la séquence d'images pendant un déplacement relatif entre le véhicule à moteur (1) et l'objet cible (5),
**caractérisé par** les étapes suivantes :
- détecter un état stationnaire, dans lequel à la fois le véhicule à moteur (1) et l'objet cible (5) se mettent à l'arrêt,
- après avoir détecté l'état stationnaire, stocker la position relative courante de l'objet cible (5) par rapport au véhicule à moteur (1), et
- examiner si un critère prédéterminé par rapport au déplacement relatif est satisfait en définissant un compteur de validation d'objet (TC) devant être incrémenté ou décrémenté en fonction d'un état de déplacement courant (VS, VN, VM) du véhicule à moteur (1) et/ou en fonction d'un état de déplacement courant (OS, ON, OM) de l'objet cible (5) et/ou selon que l'objet cible (5) est détecté ou non sur la base d'images courantes de la caméra (3) (+D, -D), le suivi de l'objet cible (5) étant poursuivi si le compteur de validation d'objet (TC) dépasse une valeur limite de compteur prédéfinie par suivi de l'objet cible (5) à partir de la position relative stockée,
le suivi de l'objet cible (5) étant repris si
- au moins le véhicule à moteur (1) ou l'objet cible (5) se déplace à nouveau, ou
- à la fois le véhicule à moteur (1) et l'objet cible (5) se déplacent à nouveau.

2. Procédé selon la revendication 1,
**caractérisé en ce que**
la valeur courante d'une vitesse (V) du véhicule à moteur (1) est reçue par le dispositif de traitement d'images par le biais d'un bus de communication du véhicule à moteur (1).

3. Procédé selon l'une quelconque des revendications précédentes,
**caractérisé en ce que**
l'arrêt du véhicule à moteur (1) est supposé si la valeur courante d'une vitesse (V) du véhicule à moteur (1) est inférieure à une première valeur limite de vitesse prédéfinie (V1), et/ou **en ce que** le véhicule à moteur (1) est interprété comme déplacé si la valeur courante de la vitesse (V) du véhicule à moteur (1) est supérieure à une deuxième valeur limite de vitesse prédéfinie (V2).

4. Procédé selon la revendication 3,
**caractérisé en ce que**
l'arrêt du véhicule à moteur (1) est supposé uniquement si la valeur courante de la vitesse (V) est inférieure à la première valeur limite de vitesse (V1) pendant au moins un premier intervalle de temps prédéfini (T1), et/ou **en ce que** le véhicule à moteur (1) est interprété comme déplacé uniquement si la valeur courante de la vitesse (V) est supérieure à la deuxième valeur limite de vitesse (V2) pendant au moins un deuxième intervalle de temps prédéfini (T2).

5. Procédé selon l'une quelconque des revendications précédentes,
**caractérisé en ce que**
l'arrêt et/ou un nouveau déplacement de l'objet cible (5) sont détectés en fonction d'un état de déplacement courant du véhicule à moteur (1), ainsi qu'en fonction des images.

6. Procédé selon l'une quelconque des revendications précédentes,
**caractérisé en ce que**
le compteur de validation d'objet (TC) est incrémenté au moins si
- avec un arrêt détecté (OS) de l'objet cible (5), le véhicule à moteur (1) est interprété comme déplacé et en plus une détection (D) de l'objet cible (5) sur la base d'images courantes de la caméra (3) est présente, et/ou
- avec un arrêt détecté (VS) du véhicule à moteur (1), l'objet cible (5) est interprété comme déplacé et en plus une détection (D) de l'objet cible (5) sur la base d'images courantes de la caméra (3) est présente, et/ou
- à la fois l'objet cible (5) et le véhicule à moteur (1) sont interprétés comme déplacés et en plus une détection (D) de l'objet cible (5) sur la base d'images courantes de la caméra (3) est présente.

7. Procédé selon l'une quelconque des revendications précédentes,
**caractérisé en ce que**
le compteur de validation d'objet (TC) est décrémenté au moins si l'objet cible (5) et/ou le véhicule à moteur (1) sont interprétés comme déplacés et une détection (-D) de l'objet cible (5) sur la base d'images courantes de la caméra (3) n'est pas présente.

8. Procédé selon l'une quelconque des revendications précédentes,
**caractérisé en ce que**
le compteur de validation d'objet (TC) est maintenu constant à la valeur précédente (TC') si une détection (-D) de l'objet cible (5) sur la base d'images courantes de la caméra (3) n'est pas présente avec l'arrêt détecté (VS) du véhicule à moteur (1).

9. Système de caméras (2) pour un véhicule à moteur (1), comportant une caméra (3) destinée à fournir une séquence d'images d'une région environnementale (6) du véhicule à moteur (1), et comportant un dispositif électronique de traitement d'images, qui est adapté pour
- détecter un objet cible (5) dans la région environnementale (6) en extrayant des éléments caractéristiques d'une image comportant des coins et/ou des bords, et
- suivre l'objet cible (5) en déterminant des vecteurs de flux optique de l'objet cible (5) sur la base de la séquence d'images pendant un déplacement relatif entre le véhicule à moteur (1) et l'objet cible (5),
**caractérisé en ce que**
le dispositif de traitement d'images est adapté pour
- détecter un état stationnaire, dans lequel à la fois le véhicule à moteur (1) et l'objet cible (5) se mettent à l'arrêt,
- après avoir détecté l'état stationnaire, stocker la position relative courante de l'objet cible (5) par rapport au véhicule à moteur (1), et
- examiner si un critère prédéterminé par rapport au déplacement relatif est satisfait en définissant un compteur de validation d'objet (TC) devant être incrémenté ou décrémenté en fonction d'un état de déplacement courant (VS, VN, VM) du véhicule à moteur (1) et/ou en fonction d'un état de déplacement courant (OS, ON, OM) de l'objet cible (5) et/ou selon que l'objet cible (5) est détecté ou non sur la base d'images courantes de la caméra (3) (+D, -D), le suivi de l'objet cible (5) étant poursuivi si le compteur de validation d'objet (TC) dépasse une valeur limite de compteur prédéfinie par suivi de l'objet cible (5) à partir de la position relative stockée,
le suivi de l'objet cible (5) est repris si
- au moins le véhicule à moteur (1) ou l'objet cible (5) se déplace à nouveau, ou à la fois le véhicule à moteur (1) et l'objet cible (5) se déplacent à nouveau.

10. Véhicule à moteur (1) avec un système de caméras (2) selon la revendication 9.
